# EUROPEAN PATENT APPLICATION

(11) **EP 2 830 016 A1**
(43) Date of publication of application: **28.01.2015**
(21) Application number: 14002564.4
(22) Date of filing: 22.07.2014
(51) Int. Cl.: G06Q 50/00, H04W 4/02

(54) **Facilitating introductions during the onboarding process using a mobile device**

(30) Priority: 23.07.2013 US 201313948535
(71) Applicant: SAP SE, 69190 Walldorf (DE)
(72) Inventor: Bare, Said, 69190 Walldorf (DE); Getzner, Robert, 69190 Walldorf (DE)
(74) Representative: Müller-Boré & Partner Patentanwälte PartG mbB

(57) **Abstract**

The subject matter disclosed herein provides methods for facilitating introductions with new employees using a mobile application. The method may maintain profiles that include one or more new employee and existing employee profiles. The profiles have identifiers that identify the employees. A first request may be received from a mobile program running on a first mobile device of a first employee when the first mobile device is within a predetermined distance of a second mobile device of a second employee. The first request may include an identifier associated with the second employee. A profile of the second employee may be accessed based on the identifier to determine whether the second employee is a new or an existing employee. A notification may be sent to the mobile program running on the first mobile device based on the determination. Related apparatus, systems, techniques, and articles are also described.

## Description

### TECHNICAL FIELD

This disclosure relates generally to a mobile program that can be used on a mobile device to find new employees and facilitate introductions with new employees during the onboarding process.

### BACKGROUND

Joining a company as a new employee presents many challenges. These challenges include, for example, developing an understanding of one's job responsibilities and quickly contributing to the company's successes. Many companies utilize onboarding programs (also referred to as new hire or new employee programs) to help new employees acquire the necessary knowledge and skills to become effective organizational members during the first few weeks or months of employment. Traditionally, these programs involve orientation activities and training sessions that are designed to integrate the new employee into his/her department by facilitating introductions with co-workers. Because the scope of these programs is often limited to the new employee's department, he/she may have difficulty meeting employees in other parts of the company.

### SUMMARY

In some implementations, methods and apparatus, including computer program products, are provided for facilitating introductions with new employees.

In one aspect, profiles including one or more new employee profiles and one or more existing employee profiles are maintained. The profiles have identifiers that identify employees. A first request is received from a mobile program running on a first mobile device of a first employee when the first mobile device of the first employee is within a predetermined distance of a second mobile device of a second employee. The first request includes an identifier associated with the second employee. A profile of the second employee is accessed based on the identifier to determine whether the second employee is a new employee or an existing employee. A notification is sent to the mobile program running on the first mobile device of the first employee based on the determining.

The above methods, apparatus, and computer program products may, in some implementations, further include one or more of the following features.

The notification may be automatically sent to the mobile program running on the first mobile device of the first employee only when the second employee is a new employee.

The first employee may be an existing employee.

The one or more new employee profiles and the one or more existing employee profiles may include at least a name, a picture, a date of hire, a department, a position, a resume, one or more professional contacts, and one or more personal contacts.

The one or more new employee profiles and the one or more existing employee profiles may include public information and private information.

A second request may be received from the mobile program running on the first mobile device of the first employee to display the profile of the second employee. Public information in the profile of the second employee may be sent to the mobile program running on the first mobile device of the first employee.

A third request may be received from the mobile program running on the first mobile device of the first employee to send a virtual visit card to another mobile program running on the second mobile device of the second employee. The virtual visit card may be sent to the second mobile device of the second employee. The virtual visit card may include public information in a profile of the first employee and a request to rate an interaction with the first employee.

A rating of the interaction with the first employee may be received from the other mobile program running on the second mobile device of the second employee. The rating and information regarding the visit may be sent to a performance management system. The information may include the name of the first employee, the name of the second employee, and a date of the visit.

One or more key performance indicators associated with visits by the first employee may be tracked. The one or more key performance indicators may include at least a total number of visits, an average rating for the visits, and a total number of different new employees encountered during the visits.

A fourth request may be received from the other mobile program running on the second mobile device of the second employee to add the first employee to a social network of the second employee. The fourth request may be sent to a social media platform.

It is to be understood that both the foregoing general description and the following detailed description are exemplary and explanatory only and are not restrictive. Further features and/or variations may be provided in addition to those set forth herein. For example, the implementations described herein may be directed to various combinations and subcombinations of the disclosed features and/or combinations and subcombinations of several further features disclosed below in the detailed description.

### DESCRIPTION OF DRAWINGS

The accompanying drawings, which are incorporated herein and constitute a part of this specification, show certain aspects of the subject matter disclosed herein and, together with the description, help explain some of the principles associated with the subject matter disclosed herein. In the drawings,
FIG. 1 illustrates a system architecture for facilitating introductions with new employees, in accordance with some example implementations;
FIG. 2A illustrates a notification that may be displayed on a mobile device of an existing employee, in accordance with some example implementations;
FIG. 2B illustrates a retrieved employee profile that may be displayed on a mobile device of an existing employee, in accordance with some example implementations;
FIG. 2C illustrates a virtual visit card and rating information that may be displayed on a mobile device of a new employee, in accordance with some example implementations; and
FIG. 3 illustrates a flowchart for facilitating introductions with new employees, in accordance with some example implementations.

Like reference symbols in the various drawings indicate like elements.

### DETAILED DESCRIPTION

During the onboarding process, a new employee may participate in orientation activities that allow him/her to meet other co-workers in the same department. In order to broaden the scope of the onboarding process and expose the new employee to personnel across the company, this application discloses techniques for facilitating introductions with all existing employees using a mobile application installed on each employee's mobile device. When a new employee comes within a predetermined distance of an existing employee, this mobile application may display a notification to the existing employee to indicate that a new employee is nearby. Information relating to the new employee including, for example, his/her name, date of hire, department, and the like may also be displayed on the existing employee's mobile device. Arming the existing employee with this information may facilitate interaction with the new employee.

A new employee may be defined in terms of the duration of time that he/she has been at the company. This period of time may be set by company officials and may be measured by days, weeks, or months since the employee's first day with the company. If, for example, this period of time is set to two months, then an employee may be considered a new employee during his/her first two months at the company. After this period of time has passed (e.g., after the first two months), the new employee may be considered an existing employee.

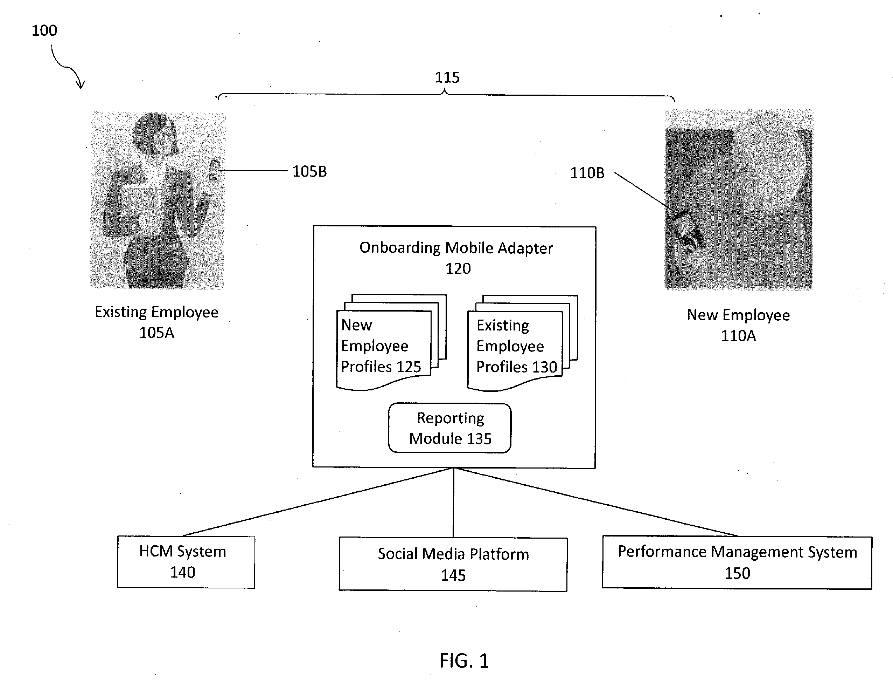

FIG. 1 illustrates a system architecture 100 for facilitating an introduction between new employee 110A and existing employee 105A. Each employee 110A and 105A may have a mobile device 110B and 105B, respectively. Mobile devices 110B and 105B may be, for example, a mobile phone, a tablet computer, a laptop computer, and the like. An onboarding mobile application may be installed on mobile devices 110B and 105B.

When a new employee joins a company, he/she may be required to install the onboarding mobile application on his/her mobile device. Existing employees may, at their discretion, decide whether to install this application depending on, for example, their willingness to participate in the onboarding process. When the onboarding mobile application is installed, an identifier associated with the employee may be installed with the application. This identifier may uniquely identify the employee and may be, for example, an employee identification number, a social security number, a device number associated with the employee's mobile device (e.g., a media access control address), and the like. This identifier may identify the employee when his/her mobile device communicates with onboarding mobile adapter 120.

Onboarding mobile adapter 120 facilitates detection of new employees and enables the onboarding mobile applications installed on mobile devices 105B and 110B to access employee data. Onboarding mobile adapter 120 may have one or more databases that store new employee profiles 125 and existing employee profiles 130. Each profile may be associated with a particular employee and may include the identifier described above. Additional information including, for example, the employee's name, date of hire, department, position, the employee's resume, professional contacts and personal contacts may also be included in each profile.

Onboarding mobile adapter 120 may share the information contained in employee profiles 125 and 130 with other employees. In some implementations, an employee may designate the type of information that may be shared with others. For example, the employee may designate some types of information as public information (e.g., name, picture, date of hire, department, and position) and other types of information as private information (e.g., the employee's resume, professional contacts, and personal contacts). Onboarding mobile adapter 120 may be allowed to share public information with other employees but may not disseminate private information.

Although this disclosure refers separately to a new employee profile 125 and an existing employee profile 130, a unified employee profile may be used for both types of employees. In such an implementation, the unified employee profile may have a field that indicates whether the employee is a new employee (e.g., based on the length of time since his/her first day) or an existing employee. In some implementations, these employee profiles may be remotely stored at one or more databases at human capital management system (HCM) system 140.

Onboarding mobile adapter 120 may be operatively connected to different enterprise systems. These systems may include social media platform 145 and performance management system 150. When the onboarding mobile application installed on mobile device 105B detects a new employee nearby, the application may notify existing employee 105A of the same in order to facilitate an introduction. Information regarding this visit may be shared with onboarding mobile adapter 120 which, in turn, can share this information with systems 145 and 150 as described below.

The onboarding mobile application installed on mobile device 105B may notify existing employee 105A that new employee 110A is nearby when the new employee is within a predetermined distance 115 of the existing employee. Assuming that the location of each employee also corresponds to the location of the employee's mobile device, predetermined distance 115 may also represent the distance between mobile devices 105B and 110B.

Mobile devices 105B and 110B may use communication technologies, such as Bluetooth, near field communication, WiFi, and the like, to detect the presence of other mobile devices. If, for example, mobile device 105B detects that mobile device 110B is within the predetermined distance 115, the onboarding mobile application running on mobile device 105B may be triggered. In order to determine whether the nearby employee is a new employee or an existing employee, the onboarding mobile application running on mobile device 105B may obtain the identifier associated with the onboarding mobile application running on mobile device 110B. As explained above, this identifier uniquely identifies an employee and may be installed with the onboarding mobile application. The onboarding mobile application running on mobile device 105B may transmit a request with this identifier to onboarding mobile adapter 120.

Upon receiving this request, onboarding mobile adapter 120 may search new employee profiles 125 and existing employee profiles 130 to find a profile having a matching identifier. If the matching identifier is associated with an existing employee profile 130, then onboarding mobile adapter 120 may send a notification indicating the same to the onboarding mobile application running on mobile device 105B. In some implementations, however, onboarding mobile adapter 120 may not send any notification. A notification may be unnecessary in these circumstances because the application is designed to facilitate introductions with new employees and not other existing employees. In these implementations, a notification may be sent only when the matching identifier is associated with a new employee profile 125.

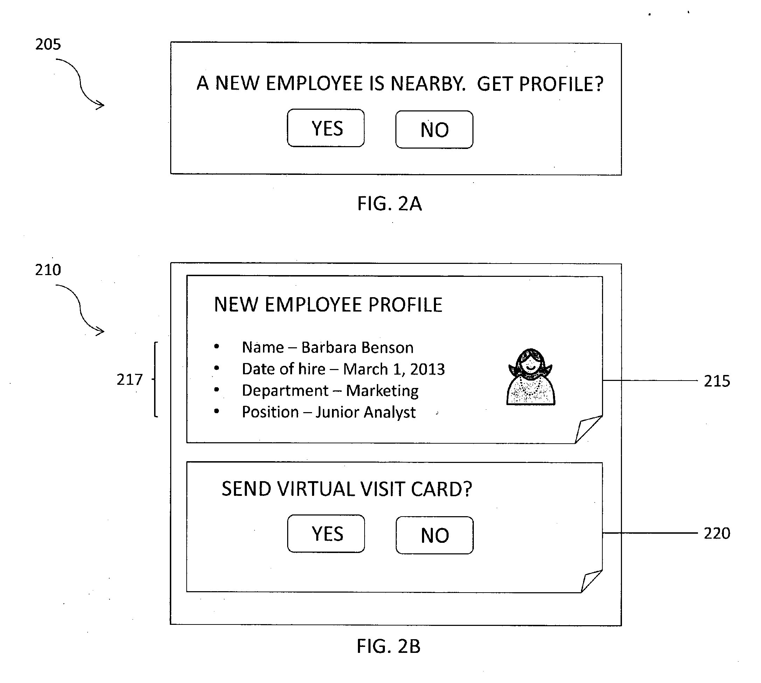

If the matching identifier is associated with a new employee profile 125, then onboarding mobile adapter 120 may automatically send a notification to the onboarding mobile application running on mobile device 105B. As illustrated in FIG. 2A, notification 205 may indicate that a new employee 110A is nearby. Notification 205 may be sent via various modalities including, for example, a text message, an e-mail, an alert, and the like.

Notification 205 may also ask existing employee 105A whether she wishes to obtain the profile of new employee 110A. Existing employee 105A may respond by selecting either the "YES" or "NO" button. If the "NO" button is selected, then the program may be terminated. If, however, the "YES" button is selected, then the onboarding mobile application running on mobile device 105B may send a request to onboarding mobile adapter 120 to retrieve this profile. Upon receiving this request, onboarding mobile adapter 120 may extract the public information from the profile belonging to new employee 110A and send this information to the onboarding mobile application running on mobile device 105B.

FIG. 2B illustrates a screenshot 210 that may be displayed on mobile device 105B. Screenshot 210 may display the retrieved profile 215 belonging to new employee 110A. Retrieved profile 215 may display public information 217 associated with new employee 110A. Public information 217 may include, for example, the employee's name, date of hire, department, position, and picture. Existing employee 105A may use this information to initiate a conversation with new employee 110A.

During this visit, existing employee 105A may send a virtual visit card to new employee 110A by selecting either the "YES" or "NO" button in area 220. A virtual visit card may include a profile of the existing employee 105A. New employee 110A may save these virtual visit cards as a record of her visits with different employees in the company. When existing employee 105A selects the "YES" button, the onboarding mobile application running on mobile device 105B may send a request indicating the same to onboarding mobile adapter 120. Upon receiving this request, onboarding mobile adapter 120 may find the requesting employee's profile, extract the public information from the profile, and send this public information to the onboarding mobile application running on mobile device 110B.

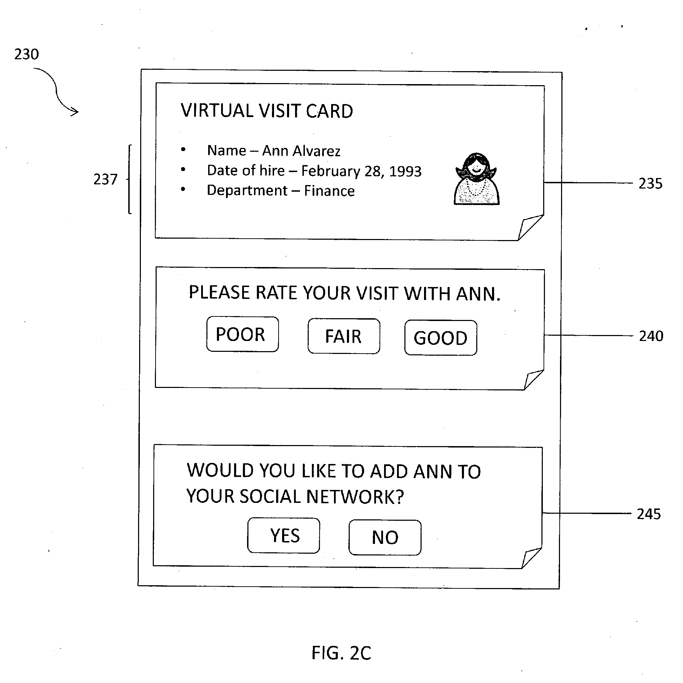

FIG. 2C illustrates a screenshot 230 of a virtual visit card 235 that may be displayed on mobile device 110B. The virtual visit card 235 may include public information 237 from the profile of existing employee 105A. This public information may include, for example, the employee's name, date of hire, department, and picture.

Screenshot 230 may also include an area 240 that allows new employee 110A to rate her visit with existing employee 105A. In the implementation of FIG. 2C, new employee 110A may rate the visit by selecting one of the "poor," "fair," or "good" buttons. Other rating scales may be used including, for example, numerical scores and the like.

Upon receiving the rating selection from the mobile program running on mobile device 110B, onboarding mobile adapter 120 may send the rating to performance management system 150. In some implementations, onboarding mobile adapter 120 may send additional information regarding the visit including, for example, the name of the existing employee 105A and the new employee 110A and the date of the visit.

Reporting module 135 in onboarding mobile adapter 120 may use this data to track various key performance indicators associated with these facilitated introductions. For example, reporting module 135 may monitor the total number of facilitated introductions during a particular period of time, the average rating of these visits, the total number of different new employees met during these visits (rather than repeat visits with previously encountered new employees), the total number of virtual visit cards exchanged during these visits, and the like. These indicators can be tracked for all existing employees or for a specific subset of employees (e.g., existing employees in a specific department, existing employees applying for a managerial position, etc.). Company personnel may use this information to assess, for example, the level of participation by existing employees in the onboarding process and the nature of these interactions. Existing employees who reach out to new employees and consistently receive high ratings based on these facilitated introductions may be rewarded for their participation in the onboarding process.

Returning to FIG. 2C, screenshot 230 may also ask new employee 11 0A whether she would like to add existing employee 105A to her social network. New employee 110A may respond by selecting either the "YES" or "NO" button in area 245. If the "YES" button is selected, then the onboarding mobile application running on mobile device 110B may send a request indicating the same to onboarding mobile adapter 120. Onboarding mobile adapter 120 may receive and transmit this request to social media platform 145. Social media platform 145 may be used by new and existing employees to create and share information in virtual communities and networks. Social media platform 145 may be implemented, for example, as an Internet based application. Upon receiving this request, social media platform 145 may add existing employee 105A to the social network of new employee 110A and publish this information for other employees to see.

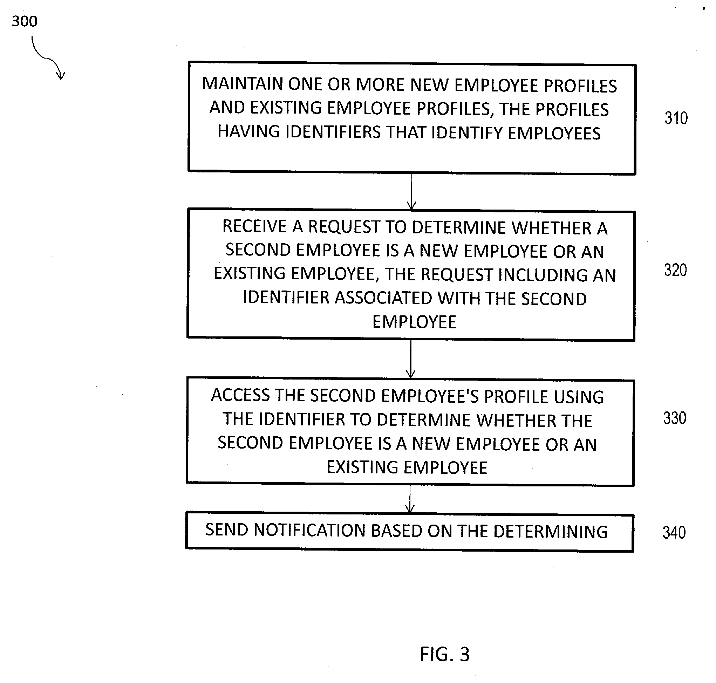

FIG. 3 illustrates a process 300 for facilitating an introduction between a new employee and an existing employee.

At 310, one or more new employee profiles 125 and existing employee profiles 130 may be maintained by onboarding mobile adapter 120. These profiles may be stored in one or more databases at onboarding mobile adapter 120 or HCM system 140. These profiles may include identifiers that identify employees. These profiles may also include the employee's name, date of hire, department, position, resume, professional contacts, personal contacts, and a picture.

At 320, onboarding mobile adapter 120 may receive a request from a mobile program running on a mobile device of a first employee to determine whether a second employee is a new employee or an existing employee. This request may include the second employee's identifier and may be sent to onboarding mobile adapter 120 when the second employee and her mobile device are within a predetermined distance of the first employee's mobile device. In some implementations, the first employee may be an existing employee 105A, and the second employee may be a new employee 110A.

At 330, onboarding mobile adapter 120 may determine whether the second employee is a new employee or an existing employee by at least accessing the second employee's profile using the identifier in the request received at 320.

At 340, onboarding mobile adapter 120 may send a notification to the mobile program running on the mobile device of the first employee based on the determining. If, for example, onboarding mobile adapter 120 determines that the second employee is a new employee, then notification 205 can be sent to the first employee indicating that a new employee is nearby. If, however, the second employee is an existing employee, then no notification may be sent.

One or more aspects or features of the subject matter described herein may be realized in digital electronic circuitry, integrated circuitry, specially designed application specific integrated circuits (ASICs), field programmable gate arrays (FPGAs) computer hardware, firmware, software, and/or combinations thereof. These various aspects or features may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which may also be referred to as programs, software, software applications, applications, components, or code, include machine instructions for a programmable processor, and may be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The machine-readable medium may store such machine instructions non-transitorily, such as for example as would a non-transient solid-state memory or a magnetic hard drive or any equivalent storage medium. The machine-readable medium may alternatively or additionally store such machine instructions in a transient manner, such as for example as would a processor cache or other random access memory associated with one or more physical processor cores.

To provide for interaction with a user, one or more aspects or features of the subject matter described herein may be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices may be used to provide for interaction with a user as well. For example, feedback provided to the user may be any form of sensory feedback, such as for example visual feedback, auditory feedback, or tactile feedback; and input from the user may be received in any form, including, but not limited to, acoustic, speech, or tactile input. Other possible input devices include, but are not limited to, touch screens or other touch-sensitive devices such as single or multi-point resistive or capacitive trackpads, voice recognition hardware and software, optical scanners, optical pointers, digital image capture devices and associated interpretation software, and the like.

The subject matter described herein may be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations may be provided in addition to those set forth herein. For example, the implementations described above may be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results.

## Claims

1. A non-transitory computer-readable medium containing instructions to configure a processor to perform operations comprising:
maintaining profiles including one or more new employee profiles and one or more existing employee profiles, the profiles having identifiers to identify employees;
receiving a first request from a mobile program running on a first mobile device of a first employee when the first mobile device of the first employee is within a predetermined distance of a second mobile device of a second employee, the first request including an identifier associated with the second employee;
determining whether the second employee is a new employee or an existing employee by at least accessing a profile of the second employee based on the identifier; and
sending a notification to the mobile program running on the first mobile device of the first employee based on the determining.

2. The non-transitory computer-readable medium of claim 1, wherein the notification is automatically sent to the mobile program running on the first mobile device of the first employee only when the second employee is a new employee.

3. The non-transitory computer-readable medium of claims 1 or 2, wherein the first employee is an existing employee.

4. The non-transitory computer-readable medium of any one of claims 1 to 3, wherein the one or more new employee profiles and the one or more existing employee profiles include at least a name, a picture, a date of hire, a department, a position, a resume, one or more professional contacts, and one or more personal contacts.

5. The non-transitory computer-readable medium of any one of claims 1 to 4, wherein the one or more new employee profiles and the one or more existing employee profiles include public information and private information.

6. The non-transitory computer-readable medium of any one of claims 1 to 5, the operations further comprising:
receiving a second request from the mobile program running on the first mobile device of the first employee to display the profile of the second employee; and
sending public information in the profile of the second employee to the mobile program running on the first mobile device of the first employee.

7. The non-transitory computer-readable medium of claim 5 or 6, the operations further comprising:
receiving a third request from the mobile program running on the first mobile device of the first employee to send a virtual visit card to another mobile program running on the second mobile device of the second employee; and
sending the virtual visit card to the second mobile device of the second employee, the virtual visit card including public information in a profile of the first employee and a request to rate an interaction with the first employee.

8. The non-transitory computer-readable medium of claim 7, the operations further comprising:
receiving a rating of the interaction with the first employee from the other mobile program running on the second mobile device of the second employee; and
sending the rating and information regarding the visit to a performance management system, the information including the name of the first employee, the name of the second employee, and a date of the visit.

9. The non-transitory computer-readable medium of claim 8, the operations further comprising:
tracking one or more key performance indicators associated with visits by the first employee, the one or more key performance indicators including at least a total number of visits, an average rating for the visits, and a total number of different new employees encountered during the visits.

10. The non-transitory computer-readable medium of any one of claims 7 to 9, the operations further comprising:
receiving a fourth request from the other mobile program running on the second mobile device of the second employee to add the first employee to a social network of the second employee; and
sending the fourth request to a social media platform.

11. A method comprising:
maintaining profiles including one or more new employee profiles and one or more existing employee profiles, the profiles having identifiers to identify employees;
receiving a first request from a mobile program running on a first mobile device of a first employee when the first mobile device of the first employee is within a predetermined distance of a second mobile device of a second employee, the first request including an identifier associated with the second employee;
determining whether the second employee is a new employee or an existing employee by at least accessing a profile of the second employee based on the identifier; and
sending a notification to the mobile program running on the first mobile device of the first employee based on the determining.

12. The method of claim 11, wherein the notification is automatically sent to the mobile program running on the first mobile device of the first employee only when the second employee is a new employee, and
wherein the first employee is an existing employee, and/or wherein the one or more new employee profiles and the one or more existing employee profiles include public information and private information.

13. The method of claims 11 or 12 further comprising:
receiving a second request from the mobile program running on the first mobile device of the first employee to display the profile of the second employee; and
sending public information in the profile of the second employee to the mobile program running on the first mobile device of the first employee.

14. The method of claims 12 or 13 further comprising:
receiving a third request from the mobile program running on the first mobile device of the first employee to send a virtual visit card to another mobile program running on the second mobile device of the second employee; and
sending the virtual visit card to the second mobile device of the second employee, the virtual visit card including public information in a profile of the first employee and a request to rate an interaction with the first employee.

15. A system comprising:
a processor; and
a memory, wherein the processor and the memory are configured to perform operations according to the method of any one of claims 11 to 14.
